# EUROPÄISCHE PATENTANMELDUNG

(11) **EP 4 678 359 A1**
(43) Veröffentlichungstag der Anmeldung: **14.01.2026**
(21) Anmeldenummer: 25188807.9
(22) Anmeldetag: 10.07.2025
(51) Int. Cl.: B26D 5/00, B26D 7/28, A22C 17/00, B26D 1/28, B26D 3/16, B26D 5/32, B26D 5/34, B26D 7/06, B26D 7/30, B26D 7/32, B26D 7/01, G01B 11/02

(54) **VERFAHREN ZUM AUFSCHNEIDEN VON LEBENSMITTELN UND AUFSCHNEIDEMASCHINE**

(30) Priorität: 12.07.2024 DE 102024119881
(71) Anmelder: MULTIVAC Sepp Haggenmüller SE & Co. KG, 87787 Wolfertschwenden (DE)
(72) Erfinder: Eisenach, Kai, 87787 Wolfertschwenden (DE)
(74) Vertreter: Weickmann & Weickmann PartmbB

(57) **Zusammenfassung**

Die Erfindung betrifft ein Verfahren zum Aufschneiden von Lebensmitteln mittels einer Aufschneidemaschine (100), wobei das Verfahren die folgenden Schritte umfasst: Anordnen wenigstens eines Produkt-Kalibers (K) auf einer Zuführeinheit (102) der Aufschneidemaschine (100), Zuführen, mittels der Zuführeinheit (102), des wenigstens einen Produkt-Kalibers (K) entlang einer Zuführrichtung (10) zu einer Schneideinheit (110) der Aufschneidemaschine (100), und Aufschneiden, mittels der Schneideinheit (110), des wenigstens einen Produkt-Kalibers (K) in Scheiben (S) zur Bildung von Portionen (P), wobei jede Portion (P) eine oder mehrere Scheiben (S) umfasst, wobei das wenigstens eine Produkt-Kaliber (K) wenigstens abschnittsweise mit einer vorbestimmten Scheibendicke (d), jedoch höchstens bis zu einer vorbestimmten Reststück-Länge (L_{R}) aufgeschnitten wird, wobei unmittelbar vor einem Ende des Aufschneidens des Produkt-Kalibers (K) eine oder mehrere letzte Scheiben (S) mit einer reduzierten Scheibendicke (d_{red}) oder einer erhöhten Scheibendicke (dₑᵣₕ) aufgeschnitten werden, wobei die reduzierte Scheibendicke (d_{red}) und/oder die erhöhte Scheibendicke (dₑᵣₕ), insbesondere mittels einer Steuereinheit (1*) der Aufschneidemaschine (100), derart bestimmt wird/werden, dass das wenigstens eine Produkt-Kaliber (K) im Wesentlichen, vorzugsweise exakt, bis auf die vorbestimmte Reststück-Länge (L_{R}) aufgeschnitten wird.

## Beschreibung

Die Erfindung betrifft ein Verfahren zum Aufschneiden von Lebensmitteln mittels einer Aufschneidemaschine, wobei das Verfahren die folgenden Schritte umfasst: Anordnen wenigstens eines Produkt-Kalibers auf einer Zuführeinheit der Aufschneidemaschine, Zuführen, mittels der Zuführeinheit, des wenigstens einen Produkt-Kalibers entlang einer Zuführrichtung zu einer Schneideinheit der Aufschneidemaschine, und Aufschneiden, mittels der Schneideinheit, des wenigstens einen Produkt-Kalibers in Scheiben zur Bildung von Portionen, wobei jede Portion eine oder mehrere Scheiben umfasst, wobei das wenigstens eine Produkt-Kaliber wenigstens abschnittsweise mit einer vorbestimmten Scheibendicke, jedoch höchstens bis zu einer vorbestimmten Reststück-Länge aufgeschnitten wird. Die Erfindung betrifft ferner eine Aufschneidemaschine.

Bereits an dieser Stelle sei darauf hingewiesen, dass das Verfahren und/oder die Aufschneidemaschine erfindungsgemäß dazu vorgesehen ist, Lebensmittel in Form von sogenannten Produkt-Kalibern in Scheiben aufzuschneiden, aus welchen, bevorzugt geschindelte oder gestapelte oder scheibengefaltete, Portionen gebildet werden können. Die Produkt-Kaliber können dabei beispielsweise aus Wurst, Käse, gewachsenem Fleisch, gepresstem Fleisch und dergleichen gebildet sein. Die Zuführeinheit kann beispielsweise als ein endlos umlaufender Bandförderer oder dergleichen ausgebildet sein. Vorzugsweise ist die Schneideinheit in Bezug auf die Zuführrichtung stromabwärts der Zuführeinheit angeordnet. Die Schneideinheit kann ein Messer, vorzugsweise ein Sichelmesser, umfassen, welches, beispielsweise mittels einer elektrischen Antriebseinheit, um eine Rotationsachse rotierend antreibbar sein kann. Mittels des Messers können die Scheiben von einem der Schneideinheit zugewandten Ende eines jeweiligen Produkt-Kalibers abgetrennt werden.

Da die Produkt-Kaliber während des Aufschneidens in der Regel, beispielsweise mittels eines jeweiligen Greifers, an ihrem der Schneideinheit abgewandten Ende gehalten werden, kann ein jeweiliges Produkt-Kaliber nur bis zu einer vorbestimmten minimalen Reststück-Länge aufgeschnitten werden, da die Schneideinheit ansonsten mit dem jeweiligen Greifer kollidieren und/oder das Reststück unkontrolliert von dem jeweiligen Greifer entfernt werden könnte. Die vorbestimmte minimale Reststück-Länge kann auch lediglich als vorbestimmte Reststück-Länge oder als mechanische Reststück-Länge bezeichnet werden.

Sofern sich unmittelbar vor einem Ende eines Aufschneidens eines jeweiligen Produkt-Kalibers herausstellt, dass eine über die vorbestimmte Reststück-Länge hinausgehende Länge zum Aufschneiden einer weiteren Scheibe oder einer weiteren Portion nicht mehr ausreicht, wird das Aufschneiden dieses Produkt-Kalibers in der Regel sofort abgebrochen und das Reststück entfernt, obwohl es noch eine die vorbestimmte Reststück-Länge übersteigende Länge aufweist. Dies führt dazu, dass die Ausbeute, das sogenannte "Yield", reduziert wird, was nicht nur zu wirtschaftlichen Nachteilen führt, sondern auch mit Bezug auf Aspekte der Nachhaltigkeit auf abnehmende Akzeptanz trifft.

Es ist daher Aufgabe der Erfindung, hier Abhilfe zu schaffen, insbesondere durch Bereitstellung eines Verfahrens, bei welchem wenigstens ein Produkt-Kaliber nach einem Aufschneiden eine Länge aufweist, welche die vorbestimmte Reststück-Länge möglichst wenig oder bestenfalls nicht übersteigt. Ferner ist es Aufgabe der Erfindung, eine entsprechende Aufschneidemaschine bereitzustellen.

Diese Aufgabe wird erfindungsgemäß durch ein Verfahren der eingangs genannten Art gelöst, bei welchem unmittelbar vor einem Ende des Aufschneidens des wenigstens einen Produkt-Kalibers eine oder mehrere letzte Scheiben mit einer reduzierten Scheibendicke, welche geringer als die vorbestimmte Scheibendicke ist, oder einer erhöhten Scheibendicke, welche höher als die vorbestimmte Scheibendicke ist, aufgeschnitten werden, wobei die reduzierte Scheibendicke und/oder die erhöhte Scheibendicke, insbesondere mittels einer Steuereinheit der Aufschneidemaschine, derart bestimmt wird/werden, dass das wenigstens eine Produkt-Kaliber im Wesentlichen, vorzugsweise exakt, bis auf die vorbestimmte Reststück-Länge aufgeschnitten wird.

Da erfindungsgemäß vor dem Ende, d.h. dem Abschluss, des Aufschneidens des wenigstens einen Produkt-Kalibers die eine oder die mehreren letzten Scheiben mit der reduzierten oder der erhöhten Scheibendicke aufgeschnitten werden, kann das wenigstens eine Produkt-Kaliber im Wesentlichen, vorzugsweise exakt, bis auf die vorbestimmte Reststück-Länge aufgeschnitten werden, wodurch die Ausbeute, das sogenannte "Yield", maximiert werden kann. Es ist der Verdienst des Erfinders erkannt zu haben, dass, sofern nur eine oder mehrere letzte Scheiben eines jeweiligen Produkt-Kalibers mit der reduzierten oder der erhöhten Scheibendicke, die restlichen Scheiben jedoch mit der vorbestimmten Scheibendicke aufgeschnitten werden, ein Mittelwert eines Scheibengewichts und/oder eines Portionsgewichtes der aus dem wenigstens einen Produkt-Kaliber aufgeschnittenen Scheiben nur unwesentlich beeinflusst, d.h. reduziert oder erhöht, wird. Ferner wird erfindungsgemäß erreicht, dass das wenigstens eine Produkt-Kaliber im Wesentlichen vollständig, d.h. bis auf die vorbestimmte Reststück-Länge, aufgeschnitten wird und im Wesentlichen keine über diese Reststück-Länge hinausgehende Länge als zu entsorgendes Reststück verbleibt.

Die reduzierte Scheibendicke und/oder die erhöhte Scheibendicke kann/können bevorzugt mittels einer Steuereinheit der Aufschneidemaschine bestimmt werden. Ferner können sämtliche bewegliche Teile der Aufschneidemaschine mittels der Steuereinheit gesteuert werden.

Um sicherzustellen, dass eine Scheibendicke und damit ein Scheibengewicht der einen oder der mehreren letzten Scheiben nicht geringer oder höher wird, als vorgesehen, wird gemäß einem Ausführungsbeispiel der Erfindung vorgeschlagen, dass die reduzierte Scheibendicke und/oder die erhöhte Scheibendicke höchstens um einen vorbestimmten Betrag von der vorbestimmten Scheibendicke abweicht/abweichen.

In Weiterbildung dieses Ausführungsbeispiels kann der vorbestimmte Betrag höchstens 10%, vorzugsweise höchstens 5%, weiter vorzugsweise etwa 4,5%, betragen. Der vorbestimmte Betrag kann grundsätzlich in Übereinstimmung mit gesetzlichen Vorschriften, beispielsweise der Fertigpackungsverordnung (kurz: "FPackV"), oder sonstigen Vorgaben gewählt werden. Auch kann der vorbestimmte Betrag in Abhängigkeit einer Toleranzgrenze für ein Scheibengewicht der einzelnen Scheiben und/oder ein Portionsgewicht der einzelnen Portionen bestimmt werden.

Insbesondere wenn eine verbleibende aufschneidbare Länge des wenigstens einen Produkt-Kalibers die vorbestimmte Scheibendicke nur geringfügig unterschreitet, kann es von Vorteil sein, dass, unmittelbar vor dem Ende des Aufschneidens des wenigstens einen Produkt-Kalibers, nur die letzte Scheibe mit der reduzierten Scheibendicke oder der erhöhten Scheibendicke aufgeschnitten wird.

Soll jedoch sichergestellt werden, dass jede aus dem wenigstens einen Produkt-Kaliber aufgeschnittene Scheibe eine Scheibendicke aufweist, welche der vorbestimmten Scheibendicke möglichst nahe kommt, kann gemäß einem weiteren Ausführungsbeispiel unmittelbar vor dem Ende des Aufschneidens des wenigstens einen Produkt-Kalibers, eine letzte Portion, und vorzugsweise eine vorletzte Portion, mit der reduzierten Scheibendicke oder der erhöhten Scheibendicke aufgeschnitten werden. Folglich kann eine über die Reststück-Länge hinausgehende, verbleibende aufschneidbare Länge des wenigstens einen Produkt-Kalibers auf mehrere Scheiben, d.h. die letzte, und vorzugsweise die vorletzte Portion, aufgeteilt werden, so dass die Abweichung von der vorbestimmten Scheibendicke für jede einzelne der letzten Scheiben möglichst gering ist.

Gemäß einem weiteren Ausführungsbeispiel wird vorgeschlagen, dass die eine oder die mehreren letzten Scheiben mit der reduzierten Scheibendicke aufgeschnitten werden, wenn ein Mittelwert eines Ist-Portionsgewichtes einer Mehrzahl von Portionen oder aller Portionen, welche in der Vergangenheit, vorzugsweise jedoch innerhalb einer gleichen Produktionscharge, aufgeschnitten worden sind, um mehr als einen vorbestimmten Betrag höher als ein vorbestimmtes Soll-Portionsgewicht ist, und/oder die eine oder die mehreren letzten Scheiben mit der erhöhten Scheibendicke aufgeschnitten werden, wenn ein Mittelwert eines Ist-Portionsgewichtes einer Mehrzahl von Portionen oder aller Portionen, welche in der Vergangenheit, vorzugsweise jedoch innerhalb einer gleichen Produktionscharge, aufgeschnitten worden sind, um weniger als einen vorbestimmten Betrag höher als ein vorbestimmtes Soll-Portionsgewicht ist und/oder gleich wie oder geringer als ein vorbestimmtes Soll-Portionsgewicht ist. Hierdurch kann das sogenannte "Give-Away", d.h. ein über das vorbestimmte Soll-Portionsgewicht hinausgehendes Gewicht einer oder mehrerer Portionen, auf ein Minimum reduziert werden und gleichzeitig sichergestellt werden, dass der Mittelwert des Ist-Portionsgewichts sämtlicher innerhalb einer Produktionscharge aufgeschnittener Portionen dem vorbestimmten Soll-Portionsgewicht möglichst nahe kommt.

Sofern während des Aufschneidens einer Produktionscharge ermittelt wird, dass der Mittelwert der Ist-Portionsgewichte zu einem Betrachtungszeitpunkt höher als vorgesehen ist, können die eine oder die mehreren letzten Scheiben mit der reduzierten Scheibendicke aufgeschnitten werden, so dass die letzte, und optional die vorletzte, Portion ein geringeres Ist-Portionsgewicht aufweist/aufweisen, um den Mittelwert dem Soll-Portionsgewicht anzunähern. Sofern während des Aufschneidens einer Produktionscharge hingegen ermittelt wird, dass der Mittelwert der Ist-Portionsgewichte zu einem Betrachtungszeitpunkt niedriger als vorgesehen ist, können die eine oder die mehreren letzten Scheiben mit der erhöhten Scheibendicke aufgeschnitten werden, so dass die letzte, und optional die vorletzte, Portion, ein höheres Ist-Portionsgewicht aufweist/aufweisen, um den Mittelwert dem Soll-Portionsgewicht anzunähern. Zusätzlich zum oder anstelle des Mittelwerts des Soll-Portionsgewichts kann dabei auch das Give-Away selbst berücksichtigt werden, wobei beispielsweise mit der erhöhten Scheibendicke aufgeschnitten werden kann, wenn das Give-Away kleiner als oder gleich wie ein vorbestimmter Wert, beispielsweise 0,3 %, ist und/oder mit der erhöhten Scheibendicke aufgeschnitten werden kann, wenn das Give-Away größer als oder gleich wie ein vorbestimmter Wert, beispielsweise 0,3 %, ist. Sofern das Give-Away dabei größer als 0 ist, werden im Mittel nur Portionen aufgeschnitten, welche das vorbestimmte Soll-Portionsgewicht zumindest geringfügig übersteigen.

Sollte ein Fall auftreten, in welchem die verbleibende aufschneidbare Länge des wenigstens einen Produkt-Kalibers die vorbestimmte Scheibendicke deutlich, beispielsweise um mehr als 10% oder mehr als 20% unterschreitet, wird vorgeschlagen, dass, sofern bestimmt wird, dass die reduzierte Scheibendicke um mehr als um den vorbestimmten Betrag von der vorbestimmten Scheibendicke abweicht, keine weiteren Scheiben von dem wenigstens einen Produkt-Kaliber aufgeschnitten werden.

Grundsätzlich ist es denkbar, vor einem Aufschneiden eine Länge des wenigstens einen Produkt-Kalibers, beispielsweise mittels einer Längenmesseinrichtung, insbesondere der Aufschneidemaschine, zu erfassen und im Anschluss eine Scheibendicke derart zu bestimmen, dass das wenigstens eine Produkt-Kaliber bis auf die Reststück-Länge vollständig aufgeschnitten wird. Im Zusammenhang mit der vorliegenden Erfindung wird jedoch vorgeschlagen, dass die vorbestimmte Scheibendicke eine feste vorbestimmte Scheibendicke ist, welche vorzugsweise unabhängig von einer Länge des wenigstens einen Produkt-Kalibers festgelegt wird.

Zusätzlich oder alternativ ist es denkbar, dass vor dem Aufschneiden, insbesondere mittels einer Längenmesseinheit und/oder mittels der Zuführeinheit, eine Länge des wenigstens einen Produkt-Kalibers bestimmt wird und die reduzierte Scheibendicke und/oder die erhöhte Scheibendicke und/oder die Anzahl von Scheiben, welche mit der reduzierten Scheibendicke bzw. der erhöhten Scheibendicke aufgeschnitten werden, in Abhängigkeit der Länge bestimmt wird. Sofern die Länge bereits vor dem Aufschneiden bestimmt wird, kann bereits vergleichsweise frühzeitig bestimmt werden, wie viele Scheiben voraussichtlich mit der vorbestimmten Scheibendicke und wie viele Scheiben voraussichtlich mit der reduzierten oder der erhöhten Scheibendicke aus dem wenigstens einen Produkt-Kaliber aufgeschnitten werden können. Die Längenmesseinheit kann beispielsweise eine optische Messeinheit, vorzugsweise ein Scanner, wie etwa ein Röntgenscanner, oder dergleichen sein. Zusätzlich oder alternativ kann die Länge über die Zuführeinheit ermittelt werden, indem beispielsweise eine Position einer Greifereinheit überwacht wird. Vor dem Aufschneiden und bei einem erstmaligen Berühren des wenigstens einen Produkt-Kalibers mittels eines an der Greifereinheit angeordneten Greifers kann somit beispielsweise anhand eines Abstandes des Greifers von einem Anschlag, an welchem das wenigstens eine Produkt-Kaliber mit seinem von dem Greifer abgewandten Ende anliegt, die Länge bestimmt werden.

Zusätzlich oder alternativ kann während des Aufschneidens, insbesondere mittels einer Längenmesseinheit und/oder mittels der Zuführeinheit, eine verbleibende aufschneidbare Länge des wenigstens einen Produkt-Kalibers bestimmt werden, und die reduzierte Scheibendicke und/oder die erhöhte Scheibendicke und/oder die Anzahl von Scheiben, welche mit der reduzierten Scheibendicke bzw. der erhöhten Scheibendicke aufgeschnitten werden, in Abhängigkeit der verbleibenden aufschneidbaren Länge bestimmt werden. Also Folge hiervon ist es möglich, erst während des Aufschneidevorgangs zu bestimmen, ob und wie die reduzierte Scheibendicke und/oder die erhöhte Scheibendicke gewählt werden soll/sollen und viele Scheiben mit reduzierter Scheibendicke bzw. erhöhter Scheibendicke aufgeschnitten werden sollen. Dies kann insbesondere dann von Vorteil sein, wenn die tatsächlich aufschneidbare Anzahl von Scheiben auf Grund von betriebsbedingten Toleranzen oder sonstigen Abweichungen vor dem Aufschneiden nicht exakt vorhergesagt werden kann.

Gemäß noch einem weiteren Ausführungsbeispiel kann eine Mehrzahl von Produkt-Kalibern auf der Zuführeinheit der Aufschneidemaschine angeordnet werden, die Mehrzahl von Produkt-Kalibern im Wesentlichen zeitgleich mittels der Zuführeinheit entlang der Zuführrichtung zu der Schneideinheit zugeführt werden und mittels der Schneideinheit aufgeschnitten werden. Dabei kann/können vorzugsweise für jedes der Mehrzahl von Produkt-Kalibern eine oder mehrere letzte Scheiben mit einer oder der reduzierten Scheibendicke oder einer oder der erhöhten Scheibendicke aufgeschnitten werden, wobei die reduzierte Scheibendicke und/oder die erhöhte Scheibendicke derart bestimmt wird/werden, dass jedes der Mehrzahl von Produkt-Kalibern im Wesentlichen, vorzugsweise exakt, bis auf die vorbestimmte Reststück-Länge aufgeschnitten wird. In anderen Worten ist das erfindungsgemäße Verfahren auch auf ein gleichzeitiges Aufschneiden mehrerer Produkt-Kaliber, insbesondere auf einer mehrspurigen Aufschneidemaschine, anwendbar. Dabei kann für jedes der Mehrzahl von Produkt-Kalibern, eine individuelle vorbestimmte Scheibendicke und/oder individuelle reduzierte oder erhöhte Scheibendicke bestimmt werden.

Gemäß einem weiteren Gesichtspunkt der Erfindung wird die obige Aufgabe durch eine Aufschneidemaschine, insbesondere einen Slicer, zum Aufschneiden von Lebensmitteln gelöst, umfassend: eine Zuführeinheit, welche dazu eingerichtet ist, wenigstens ein Produkt-Kaliber längs einer Zuführrichtung zuzuführen, eine Schneideinheit, welche dazu eingerichtet ist, das wenigstens eine Produkt-Kaliber in Scheiben aufzuschneiden, eine Portioniereinheit, welche dazu eingerichtet ist, Portionen aus den von der Schneideinheit aufgeschnittenen Scheiben zu bilden, wobei jede Portion eine oder mehrere Scheiben umfasst, und eine Steuereinheit, welche dazu eingerichtet ist, wenigstens die Zuführeinheit, die Schneideinheit und die Portioniereinheit zu steuern, wobei die Aufschneidemaschine dazu ausgebildet und bestimmt ist, das vorstehend beschriebene erfindungsgemäße Verfahren durchzuführen.

Hinsichtlich der Vorteile und Wirkungen der erfindungsgemäßen Aufschneidemaschine wird auf die Vorteile und Wirkungen des erfindungsgemäßen Verfahrens verwiesen. Sämtliche für das erfindungsgemäße Verfahren beschriebenen Aussagen treffen auch auf die erfindungsgemäße Aufschneidemaschine zu und umgekehrt.

Gemäß einem Ausführungsbeispiel kann die Aufschneidemaschine ferner eine Längenmesseinheit, vorzugsweise eine optische Längenmesseinheit, umfassen, welche dazu eingerichtet ist, vor und/oder während eines Aufschneidebetriebs der Aufschneidemaschine eine Länge des wenigstens einen Produkt-Kalibers im Wesentlichen parallel zu der Zuführrichtung zu bestimmen. Vorzugsweise kann wenigstens ein Signalausgang der Längenmesseinheit mit wenigstens einem Signaleingang der Steuereinheit verbunden sein.

Ferner kann die Aufschneidemaschine vorzugsweise ferner eine Greifereinheit mit wenigstens einem Greifer umfassen, wobei der wenigstens eine Greifer dazu eingerichtet sein kann, das wenigstens eine Produkt-Kaliber an seinem der Schneideinheit abgewandten Ende zu greifen.

Um die von der Aufschneidemaschine aufgeschnittenen Portionen weiter verarbeiten, insbesondere verpacken, zu können, ist es zusätzlich oder alternativ denkbar, dass die Aufschneidemaschine ferner eine Abfördereinheit umfasst, welche dazu eingerichtet ist, die gebildeten Portionen längs einer Abförderrichtung abzufördern. Die Abfördereinheit kann beispielsweise als eine Einlegeeinheit ausgebildet sein, welche dazu eingerichtet ist, die Portionen einer Verpackungsmaschine zuzuführen.

Nachzutragen ist noch, dass die Aufschneidemaschine im Zusammenhang mit der vorliegenden Erfindung als eine einspurige oder eine mehrspurige Aufschneidemaschine ausgebildet sein kann.

Die Erfindung wird im Folgenden anhand der beigefügten Zeichnungen an Ausführungsbeispielen näher erläutert werden. Es stellen dar:
- Figur 1: eine schematische und vereinfachte Seitenansicht einer erfindungsgemäßen Aufschneidemaschine gemäß einem Ausführungsbeispiel, und
- Figur 2: eine schematische und vereinfachte Draufsicht auf die Aufschneidemaschine von Fig. 1.

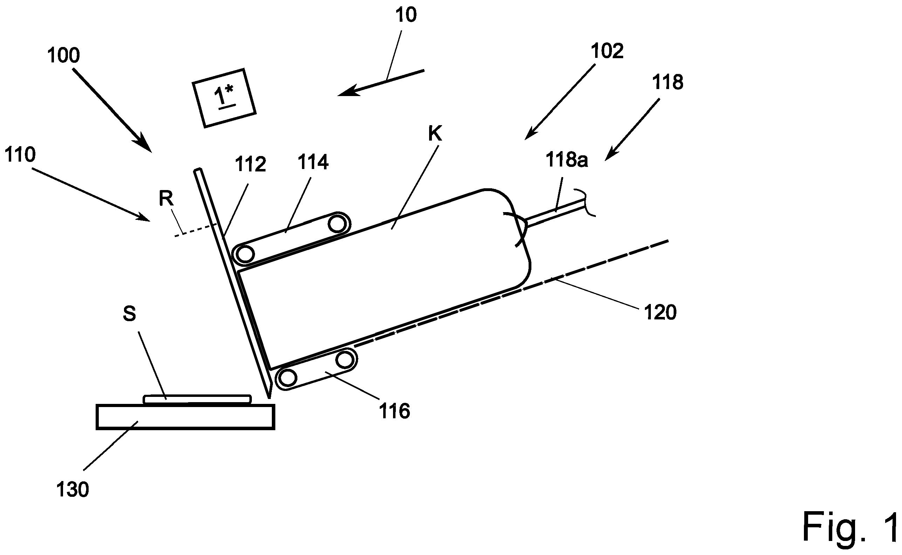

In Fig.1 ist eine erfindungsgemäße Aufschneidemaschine gemäß einem Ausführungsbeispiel allgemein durch das Bezugszeichen 100 gekennzeichnet.

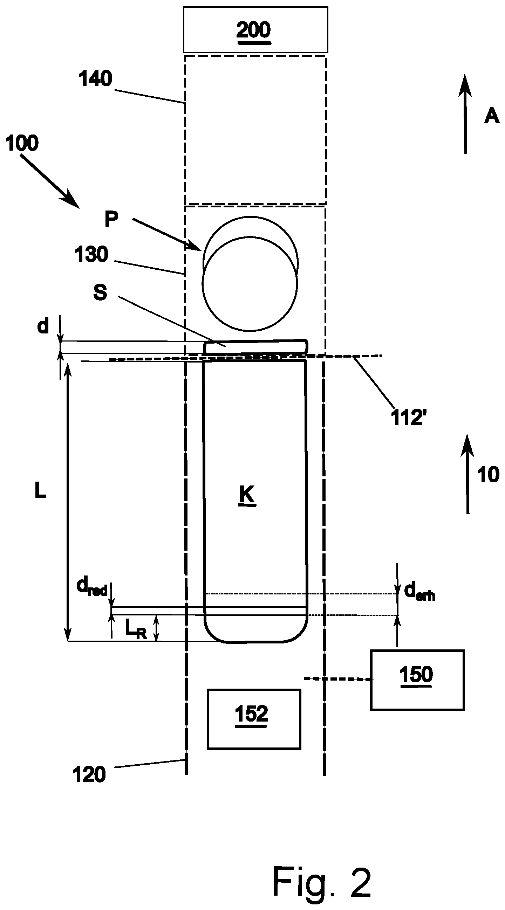

Die Aufschneidemaschine 100 kann dabei als eine einspurige oder mehrspurige Aufschneidemaschine ausgebildet sein und ist im vorliegenden Fall lediglich zur Erleichterung des Verständnisses der Erfindung als einspurige Aufschneidemaschine 100 dargestellt (siehe auch Fig. 2). Die Aufschneidemaschine 100 umfasst eine Zuführeinheit 102, welche dazu eingerichtet ist, ein Produkt-Kaliber K entlang einer Zuführrichtung 10 zu einer Schneideinheit 110 zuzuführen. Die Schneideinheit 110 kann dabei ein Messer 112 umfassen, welches, beispielsweise mittels einer elektrischen Antriebseinheit (nicht dargestellt), um eine Rotationsachse R rotierend antreibbar sein kann. Das Messer 112 kann beispielsweise als ein Sichelmesser ausgebildet sein, welches vorzugsweise einen um die Rotationsachse R variierenden, insbesondere in Drehrichtung um die Rotationsachse R zunehmenden, Radius aufweist. Folglich kann das Messer 112 bei einer Teildrehung um die Rotationsachse R zunächst einen Schneidspalt freigeben und ein Vorrücken des Produkt-Kalibers K in Zuführrichtung 10 ermöglichen und bei einer weiteren Drehung um die Rotationsachse R eine Scheibe S von dem Produkt-Kaliber K abtrennen.

An einem vorderen Ende kann das Produkt-Kaliber K durch ein oberes Traktionsband 114 und/oder ein unteres Traktionsband 116 geführt sein. Das obere Traktionsband 114 und/oder das untere Traktionsband 116 können dabei separat antreibbar sein. Es ist jedoch grundsätzlich ausreichend, wenn wenigstens eines aus dem oberen Traktionsband 114 und dem unteren Traktionsband 116 in und vorzugsweise entgegen der Zuführrichtung 10 umlaufend antreibbar ist. Darüber hinaus kann die Aufschneidemaschine 100 eine Greifereinheit 118 mit einem Greifer 118a umfassen, welcher dazu eingerichtet sein kann, das Produkt-Kaliber K an seinem der Schneideinheit 110 abgewandten Ende zu greifen.

Vor und während des Aufschneidens kann das Produkt-Kaliber K auf einem Zuförderer 120 aufliegen, welcher als ein Bandförderer ausgebildet sein kann und in den Figuren 1 und 2 ebenfalls nur schematisch dargestellt ist.

Ferner ist in Fig. 1 eine Steuereinheit 1* der Aufschneidemaschine 100 schematisch angedeutet, mittels welcher die Schneideinheit 110, eine Portioniereinheit 130 sowie die Zuführeinheit 102 der Aufschneidemaschine 100 sowie vorzugsweise sämtliche weiteren beweglichen Teile der Aufschneidemaschine 100 gesteuert werden können. Das obere Traktionsband 114, das untere Traktionsband 116, der Zuförderer 120 und die Greifereinheit 118 können dabei der Zuführeinheit 102 zugeordnet sein.

In Fig. 2, in welcher das obere Traktionsband 114 aus Übersichtsgründen weggelassen ist, ist eine Schneidebene 112' des Messers 112 lediglich schematisch durch eine gestrichelte Linie angedeutet. Mittels des Messers 112 können entsprechend durch eine Rotationsbewegung um die Rotationsachse R und in der Schneidebene 112' Scheiben S von dem Produkt-Kaliber K abgeschnitten werden. Die Scheiben S können nach dem Abschneiden auf die Portioniereinheit 130 herabfallen. Beispielsweise können durch das Stapeln oder Schindeln mehrerer Scheiben S entsprechende Portionen P auf der Portioniereinheit 130 gebildet werden. Von dort aus können die Portionen P entlang einer Abförderrichtung A zu einer Abfördereinheit 140, beispielsweise einer Einlegeeinheit in Form eines Bandeinlegers, weiterbefördert werden, welche/welcher dazu eingerichtet sein kann, die Portionen P einer nachgeordneten Bearbeitungsvorrichtung 200, beispielsweise in Form einer Verpackungsmaschine, zuzuführen, welche in Fig. 2 ebenfalls lediglich schematisch angedeutet ist. Die Abfördereinheit 140 und die Verpackungsmaschine 200 sind dabei in Fig. 1 aus Übersichtsgründen nicht dargestellt.

Ferner ist mit Bezug auf Fig. 2 ist zu beachten, dass der Greifer 118a der Greifereinheit 118 zwar nicht dargestellt ist, das Produkt-Kaliber K jedoch von einem oder dem Greifer gehalten sein kann.

Da das Produkt-Kaliber K während des Aufschneidens durch die Aufschneidemaschine 100 von dem Greifer 118a gehalten wird, kann das Produkt-Kaliber K nur bis zu einer vorbestimmten minimalen Reststück-Länge L_{R} aufgeschnitten werden, da das Messer 112 ansonsten mit dem Greifer 118a, insbesondere mit dessen in das Produkt-Kaliber K eindringenden Greifer-Klauen, kollidieren würde, was dazu führen könnte, dass ein aus dem Produkt-Kaliber K verbleibendes Reststück unkontrolliert von dem Greifer 118a entfernt werden könnte.

Grundsätzlich kann das Produkt-Kaliber K dabei mit einer vorbestimmten Scheibendicke d aufgeschnitten werden, bei welcher es sich vorzugsweise um eine feste vorbestimmte Scheibendicke d handelt, welche vorzugsweise unabhängig von einer Länge L der Produkt-Kalibers K festgelegt wird. Sofern sich dabei unmittelbar vor einem Ende eines Aufschneidens des Produkt-Kalibers K herausstellt, dass eine über die vorbestimmte Reststück-Länge L_{R} hinausgehende Länge zum Aufschneiden einer weiteren Scheibe S oder einer weiteren Portion P nicht mehr ausreicht, werden erfindungsgemäß eine oder mehrere letzte Scheiben S mit einer reduzierten Scheibendicke d_{red} aufgeschnitten, welche geringer als die vorbestimmte Scheibendicke d ist. Die reduzierte Scheibendicke d_{red} wird dabei vorzugsweise mittels der Steuereinheit 1* der Aufschneidemaschine 100 derart bestimmt, dass das Produkt-Kaliber K im Wesentlichen, vorzugsweise exakt, bis auf die vorbestimmte Reststück-Länge L_{R} aufgeschnitten werden kann.

Alternativ können die einen oder die mehreren letzten Scheiben S auch mit einer erhöhten Scheibendicke dₑᵣₕ aufgeschnitten werden, welche höher als die vorbestimmte Scheibendicke d ist. Sofern nämlich nur eine oder mehrere letzte Scheiben S des Produkt-Kalibers K mit der reduzierten Scheibendicke D_{red} oder der erhöhten Scheibendicke Dₑᵣₕ aufgeschnitten werden, die restlichen Scheiben S jedoch mit der vorbestimmten Scheibendicke d aufgeschnitten werden, wird ein Mittelwert eines Scheibengewichts und/oder eines Portionsgewichts der aus dem Produkt-Kaliber K aufgeschnittenen Scheiben S bzw. Portionen P nur unwesentlich beeinflusst, d.h. reduziert oder erhöht. Ferner wird erfindungsgemäß erreicht, dass das wenigstens eine Produkt-Kaliber K im Wesentlichen vollständig, d.h. bis auf die vorbestimmte Reststück-Länge L_{R}, aufgeschnitten werden kann und im Wesentlichen keine über diese Reststück-Länge L_{R} hinausgehende Länge als zu entsorgendes Reststück verbleibt.

Im einfachsten Fall kann beispielsweise nur die letzte Scheibe S aus dem Produkt-Kaliber K mit der reduzierten oder der erhöhten Scheibendicke aufgeschnitten werden, wobei dann alle Scheiben S aus dem Produkt-Kaliber K mit Ausnahme der letzten Scheibe S die vorbestimmte Scheibendicke d aufweisen, jedoch lediglich die letzte Scheibe S die reduzierte Scheibendicke d_{red} oder die erhöhte Scheibendicke dₑᵣₕ aufweist.

Soll jedoch sichergestellt werden, dass jede aus dem Produkt-Kaliber K aufgeschnittene Scheibe S eine Scheibendicke aufweist, welche der vorbestimmten Scheibendicke d möglichst nahe kommt, kann vor dem Ende des Aufschneidens des Produkt-Kalibers K eine letzte Portion P, und vorzugsweise eine vorletzte Portion P, mit der reduzierten Scheibendicke d_{red} oder der erhöhten Scheibendicke dₑᵣₕ aufgeschnitten werden. Dann kann eine über die Reststück-Länge L_{R} hinausgehende, verbleibende aufschneidbare Länge des Produkt-Kalibers K nämlich auf mehrere Scheiben S aufgeteilt werden, so dass die Abweichung von der vorbestimmten Scheibendicke d für jede einzelne der letzten Scheiben S möglichst gering ist.

Ferner können die eine oder die mehreren letzten Scheiben S mit der reduzierten Scheibendicke d_{red} aufgeschnitten werden, wenn ein Mittelwert eines Ist-Portionsgewichtes einer Mehrzahl von Portionen P oder aller Portionen P, welche in der Vergangenheit, vorzugsweise jedoch innerhalb einer gleichen Produktionscharge aufgeschnitten worden sind, um mehr als einen vorbestimmten Betrag höher als ein vorbestimmtes Soll-Portionsgewicht ist. Zusätzlich oder alternativ können die eine oder die mehreren letzten Scheiben S mit der erhöhten Scheibendicke dₑᵣₕ aufgeschnitten werden, wenn ein Mittelwert eines Ist-Portionsgewichtes einer Mehrzahl von Portionen P oder aller Portionen P, welche in der Vergangenheit, vorzugsweise jedoch innerhalb der gleichen Produktionscharge, aufgeschnitten worden sind, um weniger als einen vorbestimmten Betrag höher als ein vorbestimmtes Soll-Portionsgewicht ist und/oder gleich wie oder geringer als das vorbestimmte Soll-Portionsgewicht ist. Hierdurch kann das sogenannte "Give-Away", d.h. ein über das vorbestimmte Soll-Portionsgewicht hinausgehendes Gewicht einer jeweiligen Portion P auf ein Minimum reduziert werden. Das Gewicht einer jeweiligen Portion P kann dabei beispielsweise mittels einer Wiegeeinheit (nicht dargestellt) bestimmt werden, welche vorzugsweise in der Portioniereinheit 130 integriert sein kann.

Sofern eine verbleibende aufschneidbare Länge des Produkt-Kalibers K die vorbestimmte Scheibendicke d deutlich, beispielsweise um mehr als 10% oder mehr als 20% unterschreitet, kann mittels der Steuereinheit 1* bestimmt werden, dass keine weiteren Scheiben S von dem wenigstens einen Produkt-Kaliber K aufgeschnitten werden, um das Bilden von Ausschussscheiben zu verhindern, welche gegebenenfalls nicht weiter verwendet werden können.

Da in dem dargestellten Ausführungsbeispiel die Aufschneidemaschine 100 ferner eine Längenmesseinheit 150 umfasst, kann bereits vor dem Aufschneiden die Länge L des Produkt-Kalibers K bestimmt werden und mittels der Steuereinheit 1* eine voraussichtliche reduzierte Scheibendicke d_{red} und/oder eine voraussichtliche erhöhte Scheibendicke dₑᵣₕ und/oder eine voraussichtliche Anzahl von Scheiben S bestimmt werden, welche mit der reduzierten Scheibendicke d_{red} bzw. der erhöhten Scheibendicke dₑᵣₕ aufgeschnitten werden. Ferner kann bereits vor dem Aufschneiden des Produkt-Kalibers K mittels der Steuereinheit 1* bestimmt werden, wie viele Scheiben S voraussichtlich mit der vorbestimmten Scheibendicke d und wie viele Scheiben S mit der reduzierten Scheibendicke d_{red} oder der erhöhten dₑᵣₕ Scheibendicke aufgeschnitten werden können. Die Längenmesseinheit 150 kann beispielsweise als eine optische Längenmesseinheit, vorzugsweise als ein Laser und/oder ein Röntgen-Scanner, ausgebildet sein. Ferner kann eine Wiegeeinheit 152 an dem Zuförderer 120 vorgesehen, insbesondere in den Zuförderer 120 integriert, sein, um ein Gewicht des Produkt-Kalibers K, vorzugsweise vor dem Aufschneiden und/oder während des Aufschneidens, zu bestimmen.

Zusätzlich oder alternativ kann auch während des Aufschneidens mittels der Längenmesseinheit 150 bestimmt werden, wie groß eine verbleibende aufschneidbare Länge des Produkt-Kalibers K ist, und die reduzierte Scheibendicke d_{red} und/oder die erhöhte Scheibendicke dₑᵣₕ und/oder die Anzahl von Scheiben S, welche mit der reduzierten Scheibendicke d_{red} bzw. der erhöhten Scheibendicke dₑᵣₕ aufgeschnitten werden, in Abhängigkeit der verbleibenden aufschneidbaren Länge bestimmt werden.

Nachzutragen ist noch, dass die vorstehend beschriebene erfindungsgemäße Vorgehensweise ebenfalls auf ein gleichzeitiges Aufschneiden einer Mehrzahl von Produkt-Kalibern K auf einer mehrspurigen Aufschneidemaschine angewendet werden kann. In diesem Zusammenhang können die reduzierte Scheibendicke d_{red} und/oder die erhöhte Scheibendicke dₑᵣₕ für jedes Produkt-Kaliber K auf benachbarten Spuren der Aufschneidemaschine entweder separat oder gemeinsam bestimmt werden.

## Patentansprüche

1. Verfahren zum Aufschneiden von Lebensmitteln mittels einer Aufschneidemaschine (100), wobei das Verfahren die folgenden Schritte umfasst:
Anordnen wenigstens eines Produkt-Kalibers (K) auf einer Zuführeinheit (102) der Aufschneidemaschine (100),
Zuführen, mittels der Zuführeinheit (102), des wenigstens einen Produkt-Kalibers (K) entlang einer Zuführrichtung (10) zu einer Schneideinheit (110) der Aufschneidemaschine (100), und
Aufschneiden, mittels der Schneideinheit (110), des wenigstens einen Produkt-Kalibers (K) in Scheiben (S) zur Bildung von Portionen (P), wobei jede Portion (P) eine oder mehrere Scheiben (S) umfasst, wobei das wenigstens eine Produkt-Kaliber (K) wenigstens abschnittsweise mit einer vorbestimmten Scheibendicke (d), jedoch höchstens bis zu einer vorbestimmten Reststück-Länge (L_{R}) aufgeschnitten wird,
**dadurch gekennzeichnet, dass**
unmittelbar vor einem Ende des Aufschneidens des wenigstens einen Produkt-Kalibers (K) eine oder mehrere letzte Scheiben (S) mit einer reduzierten Scheibendicke (d_{red}), welche geringer als die vorbestimmte Scheibendicke (d) ist, oder einer erhöhten Scheibendicke (dₑᵣₕ), welche höher als die vorbestimmte Scheibendicke (d) ist, aufgeschnitten werden, wobei die reduzierte Scheibendicke (d_{red}) und/oder die erhöhte Scheibendicke (dₑᵣₕ), insbesondere mittels einer Steuereinheit (1*) der Aufschneidemaschine (100), derart bestimmt wird/werden, dass das wenigstens eine Produkt-Kaliber (K) im Wesentlichen, vorzugsweise exakt, bis auf die vorbestimmte Reststück-Länge (L_{R}) aufgeschnitten wird.

2. Verfahren nach Anspruch 1,
**dadurch gekennzeichnet, dass** die reduzierte Scheibendicke (d_{red}) und/oder die erhöhte Scheibendicke (dₑᵣₕ) höchstens um einen vorbestimmten Betrag von der vorbestimmten Scheibendicke (d) abweicht.

3. Verfahren nach Anspruch 2,
**dadurch gekennzeichnet, dass** der vorbestimmte Betrag höchstens 10%, vorzugsweise höchstens 5%, weiter vorzugsweise etwa 4,5%, beträgt.

4. Verfahren nach einem der vorhergehenden Ansprüche,
**dadurch gekennzeichnet, dass**, unmittelbar vor dem Ende des Aufschneidens des wenigstens einen Produkt-Kalibers (K), nur die letzte Scheibe (S) mit der reduzierten Scheibendicke (d_{red}) oder der erhöhten Scheibendicke (dₑᵣₕ) aufgeschnitten wird.

5. Verfahren nach einem der vorhergehenden Ansprüche,
**dadurch gekennzeichnet, dass**, unmittelbar vor dem Ende des Aufschneidens des wenigstens einen Produkt-Kalibers (K), eine letzte Portion (P), und vorzugsweise eine vorletzte Portion (P), mit der reduzierten Scheibendicke (d_{red}) oder der erhöhten Scheibendicke (dₑᵣₕ) aufgeschnitten wird/werden.

6. Verfahren nach einem der vorhergehenden Ansprüche,
**dadurch gekennzeichnet, dass**
die eine oder die mehreren letzten Scheiben (S) mit der reduzierten Scheibendicke (d_{red}) aufgeschnitten werden, wenn ein Mittelwert eines Ist-Portionsgewichtes einer Mehrzahl von Portionen (P) oder aller Portionen (P), welche in der Vergangenheit, vorzugsweise jedoch innerhalb einer gleichen Produktionscharge, aufgeschnitten worden sind, um mehr als einen vorbestimmten Betrag höher als ein vorbestimmtes Soll-Portionsgewicht ist,
und/oder
die eine oder die mehreren letzten Scheiben (S) mit der erhöhten Scheibendicke (dₑᵣₕ) aufgeschnitten werden, wenn ein Mittelwert eines Ist-Portionsgewichtes einer Mehrzahl von Portionen (P) oder aller Portionen (P), welche in der Vergangenheit, vorzugsweise jedoch innerhalb einer gleichen Produktionscharge, aufgeschnitten worden sind, um weniger als einen vorbestimmten Betrag höher als ein vorbestimmtes Soll-Portionsgewicht ist und/oder gleich wie oder geringer als ein vorbestimmtes Soll-Portionsgewicht ist.

7. Verfahren nach Anspruch 2 und gewünschtenfalls einem der Ansprüche 3 bis 6,
**dadurch gekennzeichnet, dass**, sofern bestimmt wird, dass die reduzierte Scheibendicke (d_{red}) um mehr als um den vorbestimmten Betrag von der vorbestimmten Scheibendicke (d) abweicht, keine weiteren Scheiben (S) von dem wenigstens einen Produkt-Kaliber (K) aufgeschnitten werden.

8. Verfahren nach einem der vorhergehenden Ansprüche,
**dadurch gekennzeichnet, dass** die vorbestimmte Scheibendicke (d) eine feste vorbestimmte Scheibendicke ist, welche vorzugsweise unabhängig von einer Länge (L) des wenigstens einen Produkt-Kalibers (K) festgelegt wird.

9. Verfahren nach einem der vorhergehenden Ansprüche
**dadurch gekennzeichnet, dass** vor dem Aufschneiden, insbesondere mittels einer Längenmesseinheit (150) und/oder mittels der Zuführeinheit (102), eine Länge (L) des wenigstens einen Produkt-Kalibers (K) bestimmt wird und die reduzierte Scheibendicke (d_{red}) und/oder die erhöhte Scheibendicke (dₑᵣₕ) und/oder die Anzahl von Scheiben (S), welche mit der reduzierten Scheibendicke (d_{red}) bzw. der erhöhten Scheibendicke (dₑᵣₕ) aufgeschnitten werden, in Abhängigkeit der Länge bestimmt wird.

10. Verfahren nach einem der vorhergehenden Ansprüche,
**dadurch gekennzeichnet, dass** während des Aufschneidens, insbesondere mittels einer Längenmesseinheit (150) und/oder mittels der Zuführeinheit (102), eine verbleibende aufschneidbare Länge des wenigstens einen Produkt-Kalibers (K) bestimmt wird, und die reduzierte Scheibendicke (d_{red}) und/oder die erhöhte Scheibendicke (dₑᵣₕ) und/oder die Anzahl von Scheiben (S), welche mit der reduzierten Scheibendicke (d_{red}) bzw. der erhöhten Scheibendicke (dₑᵣₕ) aufgeschnitten werden, in Abhängigkeit der verbleibenden aufschneidbaren Länge bestimmt wird.

11. Verfahren nach einem der vorhergehenden Ansprüche,
**dadurch gekennzeichnet, dass** eine Mehrzahl von Produkt-Kalibern (K) auf der Zuführeinheit (102) der Aufschneidemaschine (100) angeordnet wird, die Mehrzahl von Produkt-Kalibern (K) im Wesentlichen zeitgleich mittels der Zuführeinheit (102) entlang der Zuführrichtung (10) zu der Schneideinheit (110) zugeführt wird und mittels der Schneideinheit (110) aufgeschnitten wird,
wobei vorzugsweise für jedes der Mehrzahl von Produkt-Kalibern (K) eine oder mehrere letzte Scheiben (S) mit einer oder der reduzierten Scheibendicke (d_{red}) oder einer oder der erhöhten Scheibendicke (dₑᵣₕ) aufgeschnitten werden, wobei die reduzierte Scheibendicke (d_{red}) und/oder die erhöhte Scheibendicke (dₑᵣₕ) derart bestimmt wird, dass jedes der Mehrzahl von Produkt-Kalibern (K) im Wesentlichen, vorzugsweise exakt, bis auf die vorbestimmte Reststück-Länge (L_{R}) aufgeschnitten wird.

12. Aufschneidemaschine (100), insbesondere Slicer, zum Aufschneiden von Lebensmitteln, umfassend:
eine Zuführeinheit (102), welche dazu eingerichtet ist, wenigstens ein Produkt-Kaliber (K) längs einer Zuführrichtung (10) zuzuführen,
eine Schneideinheit (110), welche dazu eingerichtet ist, das wenigstens eine Produkt-Kaliber (K) in Scheiben (S) aufzuschneiden,
eine Portioniereinheit (130), welche dazu eingerichtet ist, Portionen (P) aus den von der Schneideinheit (110) aufgeschnittenen Scheiben (S) zu bilden, wobei jede Portion (P) eine oder mehrere Scheiben (S) umfasst, und
eine Steuereinheit (1*), welche dazu eingerichtet ist, wenigstens die Zuführeinheit (102), die Schneideinheit (110) und die Portioniereinheit (130) zu steuern,
**dadurch gekennzeichnet, dass**
die Aufschneidemaschine (100) dazu ausgebildet und bestimmt ist, das Verfahren nach einem der vorhergehenden Ansprüche durchzuführen.

13. Aufschneidemaschine nach Anspruch 12,
**dadurch gekennzeichnet, dass** die Aufschneidemaschine (100) ferner eine Längenmesseinheit (150), vorzugsweise eine optische Längenmesseinheit, umfasst, welche dazu eingerichtet ist, vor und/oder während eines Aufschneidebetriebs der Aufschneidemaschine (100) eine Länge (L) des wenigstens einen Produkt-Kalibers (K) im Wesentlichen parallel zu der Zuführrichtung (10) zu bestimmen.

14. Aufschneidemaschine nach Anspruch 12 oder 13,
**dadurch gekennzeichnet, dass**
die Aufschneidemaschine (100) ferner eine Greifereinheit (118) mit wenigstens einem Greifer (118a) umfasst, wobei der wenigstens eine Greifer (118a) dazu eingerichtet ist, das wenigstens eine Produkt-Kaliber (K) an seinem der Schneideinheit (110) abgewandten Ende zu greifen,
und/oder
dass die Aufschneidemaschine(100) ferner eine Abfördereinheit (140) umfasst, welche dazu eingerichtet ist, die gebildeten Portionen (P) längs einer Abförderrichtung (A) abzufördern.

15. Aufschneidemaschine nach einem der Ansprüche 12 bis 14,
**dadurch gekennzeichnet, dass** die Aufschneidemaschine (100) als eine einspurige oder eine mehrspurige Aufschneidemaschine ausgebildet ist.
